# EUROPÄISCHE PATENTSCHRIFT

(11) **EP 3 401 129 B1**
(45) Veröffentlichungstag und Bekanntmachung des Hinweises auf die Patenterteilung: **12.06.2019**
(21) Anmeldenummer: 17170746.6
(22) Anmeldetag: 12.05.2017
(51) Int. Cl.: B60C 23/00

(54) **REIFEN-DRUCKBEAUFSCHLAGUNGSEINRICHTUNG**
TYRE PRESSURISATION DEVICE
DISPOSITIF DE MISE EN PRESSION DE PNEU

(43) Veröffentlichungstag der Anmeldung: 14.11.2018
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- WO-A1-2016/090218
- CN-Y- 2 614 959
- GB-A- 659 582
- KR-A- 20080 037 512
- US-A- 4 804 027

## Beschreibung

### TECHNISCHES GEBIET DER ERFINDUNG

Reifen-Druckbeaufschlagungseinrichtungen finden Einsatz in Fahrzeugen, insbesondere Nutzfahrzeugen, Arbeitsfahrzeugen oder Agrarfahrzeugen. Reifen-Druckbeaufschlagungseinrichtungen dienen dazu, einen vorbestimmten Druck oder Druckbereich in einem Reifen des Fahrzeugs aufrechtzuerhalten, beispielsweise auch bei einer geringen Leckage, Temperaturänderungen oder einer veränderten Beladung des Fahrzeugs. Möglich ist auch, dass über eine Reifen-Druckbeaufschlagungseinrichtung gezielt eine Veränderung des Drucks in dem Reifen herbeigeführt wird, was über eine Steuerung oder Regelung erfolgen kann. Beispielsweise kann eine Änderung des Druckes in dem Reifen abhängig von einer Beladung des Fahrzeugs und/oder Fahrbetriebsbedingungen wie beispielsweise eine Geschwindigkeit des Fahrzeugs erfolgen. Mit einer erfindungsgemäßen Reifen-Druckbeaufschlagungseinrichtung erfolgt somit eine Beeinflussung der Beaufschlagung des Reifens mit Druck, was durch ein Belüften, Entlüften und/oder Absperren des Reifens erfolgen kann.

Reifen-Druckbeaufschlagungseinrichtungen der hier vorliegenden Art sind zwischen einen nicht rotierenden Achskörper, gegenüber welchem (unmittelbar oder mittelbar) das Rad gelagert ist, und eine den Reifen tragende, rotierende Felge zwischengeschaltet, um an dem Achskörper von einer Druckquelle anstehende Druckluft von dem Achskörper zur Felge zu übertragen, wo die Druckluft in den von Reifen und einem Felgenbett der Felge begrenzten Innenraum gelangen kann. Zu diesem Zweck verfügt üblicherweise eine Reifen-Druckbeaufschlagungseinrichtung über eine Achskörper-Drehdurchführung, die über einen Schlauch oder ein Rohr mit einem Felgen-Anschlusselement verbunden ist. Die Achskörper-Drehdurchführung weist einen Stator auf, der an dem Achskörper befestigt wird. Eine Rotor der Achskörper-Drehdurchführung ist verdrehbar gegenüber dem Stator gelagert. Der Rotor ist an einem rotierenden Radkörper, beispielsweise der Felge, befestigt, so dass dieser mit dem Abrollen des Rades gegenüber dem Stator relativ verdreht wird. Der Rotor ist gegenüber dem Stator derart abgedichtet, dass Druckluft von einem Eingangsanschluss des Stators unabhängig von der Rotation des Rotors gegenüber dem Stator unter Abdichtung nach außen an den Rotor übertragen werden kann, um dann von einem Ausgangsanschluss des Rotors zu dem mit dem Ausgangsanschluss verbundenen Schlauch oder Rohr zu gelangen. Der Schlauch oder das Rohr ist in dem anderen Endbereich mit einem Eingangsanschluss des Felgen-Anschlusselements verbunden. Das Felgen-Anschlusselement ist (insbesondere auf einer radial innen liegenden Fläche des Felgenbetts) an der Felge befestigt. Über einen Ausgangsanschluss des Felgen-Anschlusselements gelangt die Druckluft (insbesondere über eine geeignete Ausnehmung oder Bohrung des Felgenbetts) in den von dem Felgenbett und dem Reifen begrenzten Innenraum. Die Achskörper-Drehdurchführung und das Felgen-Anschlusselement weisen geeignete Ventilelemente auf, um beispielsweise die Beaufschlagung des Reifens zu beeinflussen und/oder einen unterwünschten Austritt von Druckluft während einer Montage der Reifen-Druckbeaufschlagungseinrichtung zu vermeiden.

### STAND DER TECHNIK

Die Druckschrift DE 20 2007 017 617 U1 offenbart eine Reifen-Druckbeaufschlagungseinrichtung, bei welcher der Stator der Achskörper-Drehdurchführung fahrzeugseitig gehalten ist, während der Rotor an einer rotierenden Nabe, an welcher die Felge des Rades befestigt ist, befestigt ist. Von dem Rotor erstreckt sich sowohl eine Leitung zur Zuführung von Druckluft zu dem Reifen als auch eine Steuerleitung zu einer Ventileinheit. Die Ventileinheit ist an der radial nach innen weisenden Unterseite des Felgenbetts der Felge befestigt. Über eine pneumatische Steuerung des Drucks in der Steuerleitung kann ein Ventil der Ventileinheit so angesteuert werden, dass die Beaufschlagung des Reifens mit Druckluft verändert werden kann. Die Ventileinheit weist einen Drucksensor auf, der über einen Sender mit einer fahrzeugseitigen Steuereinrichtung kommuniziert.

Hinsichtlich weiterer Reifen-Druckbeaufschlagungseinrichtungen, Felgen-Anschlusselementen und Achskörper-Drehdurchführungen wird beispielsweise auf die Druckschriften EP 2 613 950 B1**,** DE 199 50 191 C1**,** EP 2 952 365 B1**,** DE 20 2015 105 702 U1**,** DE 20 2011 051 737 U1**,** DE 10 2014 117 459 A1**,** DE 10 2005 018 584A1**,** GB 659 582 A**,** WO 2016/090218A1**,** CN 2 614 959Y**,** KR 2008 003512 A **und** US 4 804 027 A verwiesen.

### AUFGABE DER ERFINDUNG

Der Erfindung liegt die Aufgabe zugrunde, eine Reifen-Druckbeaufschlagungseinrichtung vorzuschlagen, welche insbesondere hinsichtlich
- der Betriebssicherheit auch bei einem Abriss oder einer Leckage des Rohrs oder Schlauchs zwischen dem Felgen-Anschlusselement und der Achskörper-Drehdurchführung,
- einer Erkennbarkeit einer Leckage oder eines Abrisses des Rohrs oder des Schlauchs auf Grundlage der Strömungsverhältnisse der Druckluft,
- eines Austausches des Rohrs oder Schlauches,
- einer Beeinträchtigung der Funktion infolge von Verunreinigungen der Druckluft,
- der (unmittelbaren oder mittelbaren) Ankopplung an eine Felge und/oder einen Achskörper,
- einer Vermeidung von Verlusten von Druckluft bei von dem Reifen und der Felge demontiertem Felgen-Anschlusselement bei gleichzeitiger Verbindung des Felgen-Anschlusselements über das Rohr oder den Schlauch und die Achskörper-Drehdurchführung mit einer den Achskörper mit Druckluft versorgenden Druckluftquelle,
- einer Ausgestaltung des Felgen-Anschlusselements ohne federbeaufschlagte Überström-Ventilelemente oder Rückschlagventilelemente,
- einer zuverlässigen Gewährleistung eines definierten Öffnungsdruckes des Felgen-Anschlusselements für die Herstellung der Verbindung zwischen dem Rohr oder Schlauch und dem Innenraum des Reifens
vorzuschlagen.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Reifen-Druckbeaufschlagungseinrichtung weist für eine Variante ein Felgen-Anschlusselement auf. Das Felgen-Anschlusselement verfügt über einen Eingangsanschluss. Der Eingangsanschluss ist mit einem Rohr oder einem Schlauch koppelbar. Des Weiteren weist das Felgen-Anschlusselement einen Ausgangsanschluss auf, der mit einer Felge (insbesondere einem Felgenbett der Felge) koppelbar ist. Für diese Variante weist das Felgen-Anschlusselement ein mechanisches Betätigungselement auf. Das mechanische Betätigungselement ragt in einen Kopplungsbereich des Felgen-Anschlusselements so hinein, dass das mechanische Betätigungselement bewegungsgesteuert mit einem (unmittelbaren oder mittelbaren) Anschließen an die Felge betätigt wird. Die bewegungsgesteuerte Betätigung des mechanischen Betätigungselements hat zur Folge, dass ein Sperrventil des Felgen-Anschlusselements geöffnet wird. Damit ist grundsätzlich ein Übertritt von Druckluft von dem Eingangsanschluss des Felgen-Anschlusselements zu dem Ausgangsanschluss und damit dem Innenraum des Reifens möglich. Allerdings weist das Felgen-Anschlusselement zusätzlich ein Rückschlagventil auf. Dieses ist vorzugsweise nicht federbeaufschlagt, so dass dieses bei einer sehr geringen Druckdifferenz zwischen der Eingangs- und Ausgangsseite des Rückschlagventils öffnet. Das Rückschlagventil ist hierbei so angeordnet, dass dieses eine Strömung von Druckluft von dem Eingangsanschluss des Felgen-Anschlusselements zu dem Ausgangsanschluss und damit zu dem Innenraum des Reifens ermöglicht, während das Rückschlagventil eine entgegengesetzte Strömung von Druckluft, welche eine Entlüftung des Reifens zur Folge hätte, unterbindet. Während grundsätzlich möglich ist, dass das Rückschlagventil zwischen dem Sperrventil und dem Ausgangsanschluss des Felgen-Anschlusselements angeordnet ist, ist dieses vorzugsweise zwischen dem Sperrventil und dem Eingangsanschluss des Felgen-Anschlusselements angeordnet. Erfindungsgemäß sind das Rückschlagventil und das Sperrventil in fluidischer Reihenschaltung zwischen dem Eingangsanschluss und dem Ausgangsanschluss des Felgen-Anschlusselements angeordnet. Die fluidische Reihenschaltung des Rückschlagventils und des Sperrventils hat zur Folge, dass zuverlässig zwei unterschiedliche Funktionen gewährleistet werden können: Einerseits gewährleistet das Sperrventil, dass eine fluidische Verbindung des Ausgangsanschlusses mit dem Eingangsanschluss des Felgen-Anschlusselements nur dann erfolgen kann, wenn auch das Felgen-Anschlusselement mechanisch mit der Felge gekoppelt ist. Somit kann für nicht mit der Felge gekoppeltem Felgen-Anschlusselement ein unerwünschtes Entweichen von Druckluft aus dem Felgen-Anschlusselement vermieden werden. Andererseits gewährleistet das Rückschlagventil, dass bei einem an dem Eingangsanschluss des Felgen-Anschlusselements anstehenden Druck, welcher größer ist als der Druck an dem Ausgangsanschluss des Felgen-Anschlusselements und vorzugsweise größer ist als der Druck in dem Innenraum des Reifens, ein Nachfüllen von Druckluft über die Reifen-Druckbeaufschlagungseinrichtung in den Reifen möglich ist. Ist das Rückschlagventil nicht mit einem erhöhten Öffnungsdruck ausgestaltet und insbesondere nicht federbeaufschlagt, treten u. U. keine oder verringerte Schwankungen der Öffnungsdrücke von Reifen-Druckbeaufschlagungseinrichtungen an unterschiedlichen Rädern des Fahrzeugs bei Versorgung derselben über eine gemeinsame Zentralleitung auf, die zu unerwünschten unterschiedlichen Druckbeaufschlagungen der unterschiedlichen Reifen führen könnten.

Für eine andere Variante der Erfindung verfügt die Reifen-Druckbeaufschlagungseinrichtung über eine Achskörper-Drehdurchführung. Die Achskörper-Drehdurchführung weist einen Stator auf. Der Stator kann an einem fahrzeugseitigen Achskörper befestigt werden. Der Stator weist einen Eingangsanschluss auf, der mit dem Achskörper koppelbar ist. Des Weiteren verfügt die Achskörper-Drehdurchführung über einen Rotor, der gegenüber dem Stator mit der Felge verdrehbar ist. Der Rotor verfügt über einen Ausgangsanschluss, der mit dem Rohr oder dem Schlauch koppelbar ist. Die Achskörper-Drehdurchführung besitzt eine nach außen abgedichtete pneumatische Verbindung zwischen dem Stator und dem Rotor, über welche der Eingangsanschluss mit dem Ausgangsanschluss der Achskörper-Drehdurchführung verbunden ist. Erfindungsgemäß weist die Achskörper-Drehdurchführung einen ersten Übertrittsquerschnitt und einen zweiten Übertrittsquerschnitt auf. Der erste Übertrittsquerschnitt und der zweite Übertrittsquerschnitt sind in fluidischer Parallelschaltung zwischen dem Eingangsanschluss und dem Ausgangsanschluss der Achskörper-Drehdurchführung angeordnet. Hierbei ist der erste Übertrittsquerschnitt permanent offen, während der zweite Übertrittsquerschnitt über ein Drucksicherungsventil verschließbar ist. Die Öffnungs- und Schließcharakteristik des Drucksicherungsventils ist hierbei derart, dass dieses automatisch seine Sperrstellung einnimmt, wenn die Druckdifferenz zwischen dem Eingangsanschluss und dem Ausgangsanschluss der Achskörper-Drehdurchführung einen Schwellwert überschreitet. Insbesondere für hinreichend befüllten Reifen und/oder ohne Leckage des Rohrs oder Schlauchs liegt die Druckdifferenz zwischen dem Eingangsanschluss und dem Ausgangsanschluss der Achskörper-Drehdurchführung unterhalb des Schwellwertes, womit das Drucksicherungsventil seine Öffnungsstellung einnimmt und beide Übertragungsquerschnitte geöffnet sind. Eine Nachfüllung des Reifens mit Druckluft kann somit in diesem Fall über beide Übertrittsquerschnitte erfolgen, so dass verhältnismäßig große Volumenströme möglich sind und eine schnelle Nachfüllung des Reifens erfolgen kann. Kommt es hingegen zu einer Leckage in dem Rohr oder Schlauch oder einem Abriss des Rohrs oder Schlauches, fällt der Druck an dem Ausgangsanschluss des Felgen-Anschlusselements ab, womit die Druckdifferenz über den Schwellwert ansteigt. Das Drucksicherungsventil nimmt automatisch seine Schließstellung ein, womit vermieden ist, dass Druckluft von dem Eingangsanschluss über das Drucksicherungsventil über die Leckage oder den abgerissenen Schlauch in die Umgebung strömen kann. In diesem Fall mit geschlossenem Drucksicherungsventil ist aber immer noch der erste Übertrittsquerschnitt offen. Dieses lässt einen begrenzten Strom von Druckluft zu, für welchen u. U. auch hingenommen werden kann, dass dieser begrenzte Strom von Druckluft in die Umgebung gelangt. Wird aber über eine geeignete Sensorik, welche stromaufwärts der beiden Übertrittsquerschnitte angeordnet ist, erkannt, dass ein derartiger begrenzter Strom von Druckluft auftritt, kann aus der Auswertung des Stroms der Druckluft detektiert werden, dass eine Leckage oder ein Abriss vorliegt. Insbesondere kann durch diese Ausgestaltung zuverlässig eine Unterscheidung der folgenden Betriebsbedingungen erfolgen:
a) Liegt kein Defekt des Rohrs oder des Schlauches vor, entspricht aber der Druck in dem Reifen dem Druck an dem Eingangsanschluss der Achskörper-Drehdurchführung, befindet sich das Drucksicherungsventil in seiner Öffnungsstellung. Dennoch strömt mangels eines Druckgefälles keine Druckluft.
b) Liegt kein Defekt des Rohrs oder des Schlauches vor, liegt aber der Druck in dem Reifen unter dem Druck an dem Eingangsanschluss der Achskörper-Drehdurchführung, befindet sich das Drucksicherungsventil in seiner Öffnungsstellung. In diesem Fall strömt ein verhältnismäßig großer, mittels der Sensorik detektierbarer Volumenstrom der Druckluft sowohl durch den ersten Übertrittsquerschnitt als auch durch den zweiten Übertrittsquerschnitt.
c) Kommt es hingegen zur Leckage des Schlauches, schließt das Drucksicherungsventil, während weiterhin ein begrenzter Strom von Druckluft über den permanent offenen ersten Übertrittsquerschnitt auftritt.

Somit kann bei einer Auswertung des Stroms der Druckluft bei einem verschwindenden Strom von Druckluft (obiger Fall a)) oder einem großen Strom von Druckluft über beide Übertrittsquerschnitte (obiger Fall b)) darauf geschlossen werden, dass das Rohr oder der Schlauch nicht defekt ist, aber der Druck in dem Reifen dem Solldruck entspricht (obiger Fall a)) oder ein ordnungsgemäßes Nachfüllen des Reifens erfolgt (obiger Fall b)), während eine Detektierung des begrenztem Stroms der Druckluft (obiger Fall c)) indiziert, dass das Rohr oder der Schlauch defekt ist. Eine derartige Unterscheidung wäre nicht möglich, wenn lediglich ein Übertrittsquerschnitt wirksam wäre, welcher mittels eines Drucksicherungsventils absperrbar wäre, womit nicht unterschieden werden könnte, ob kein Strom von Druckluft erfolgt, da der Druck in dem Reifen dem Solldruck entspricht oder infolge einer Leckage das Drucksicherungsventil abgesperrt ist.

Für einen besonderen Vorschlag der Erfindung findet in einer Reifen-Druckbeaufschlagungseinrichtung sowohl ein Felgen-Anschlusselement als auch eine Achskörper-Drehdurchführung, wie diese zuvor beschrieben worden sind, Einsatz, womit auch die zuvor erläuterten Funktionen und Wirkungen kumulativ erreicht werden.

Weitere Ausgestaltungen der Erfindung widmen sich bevorzugten Ausgestaltungen des Felgen-Anschlusselements:
Während grundsätzlich im Rahmen der Erfindung möglich ist, dass das Sperrventil des Felgen-Anschlusselements als Schieberventil ausgebildet ist, ist dieses vorzugsweise als Sitzventil ausgebildet. In diesem Fall kann als Sperrventilkörper des Sperrventils, der mit einem Sperrventilsitz in Wechselwirkung tritt, unmittelbar das Betätigungselement genutzt werden. Um lediglich ein nicht beschränkendes Beispiel zu nennen, kann hierbei der Sperrventilsitz von einem Gehäuse des Felgen-Anschlusselements oder einem Einsatz in das Gehäuse gebildet sein, und der Sperrventilsitz kann beispielsweise kreisringförmig oder teilkonusförmig ausgebildet sein, während der von dem Betätigungselement ausgebildete Sperrventilkörper als Sperrventilkörperscheibe oder Sperrventilkörper-Konusfläche ausgebildet sein kann. Möglich ist, dass zur Herbeiführung der gewünschten Dicht- und Sperrwirkung der Sperrventilsitz und/oder der Sperrventilkörper zumindest teilweise mit einem Elastomerkörper gebildet ist, ein Dichtelement aufweist, einen dichtenden Einsatz aufweist oder eine dichtende Beschichtung aufweist.

Für einen weiteren Vorschlag der Erfindung bildet das Betätigungselement des Felgen-Anschlusselements auch einen Anschlag für einen Rückschlagventilkörper des Rückschlagventils, so dass das Betätigungselement multifunktional genutzt werden kann. Hierbei definiert der Anschlag eine Öffnungsstellung des Rückschlagventilkörpers relativ zu einem Rückschlagventilsitz. Hierbei nimmt der Anschlag nicht eine feste relative Position gegenüber dem Gehäuse des Felgen-Anschlusselements und dem Rückschlagventilsitz ein, sondern diese verändert sich mit der Bewegung des Betätigungselements.

Für die konstruktive Ausgestaltung des Felgen-Anschlusselements gibt es im Rahmen der Erfindung vielfältige Möglichkeiten. Für eine Ausgestaltung ist der Rückschlagventilsitz des Rückschlagventils von einem Gehäuse des Felgen-Anschlusselements ausgebildet. Alternativ oder kumulativ möglich ist, dass der Rückschlagventilkörper in einer Innenbohrung oder Ausnehmung des Gehäuses oder einer Innenbohrung oder Ausnehmung einer in das Gehäuse eingesetzten Hülse so geführt ist, dass sich der Rückschlagventilkörper relativ zu dem Rückschlagventilsitz zwischen einer Öffnungsstellung und einer Schließstellung bewegen kann. Hierbei kann sich ein beliebiger Übertrittsquerschnitt zwischen dem Rückschlagventilkörper und der Hülse oder dem Gehäuse ergeben. Vorzugsweise ist zwischen der Innenbohrung oder Ausnehmung des Gehäuses oder der Hülse und dem Rückschlagventilkörper ein Übertrittsquerschnitt in Form eines Ringspalts gebildet.

Für eine besondere konstruktive Ausgestaltung des Felgen-Anschlusselements weist dieses eine Hülse auf, die in eine Ausnehmung eines ersten Gehäuseteils eingesetzt ist. Durch diese Hülse erstreckt sich das Betätigungselement. Eine weitere Hülse ist ebenfalls in die Ausnehmung des ersten Gehäuseteils eingesetzt. In dieser weiteren Hülse ist der Rückschlagventilkörper so geführt, dass sich der Rückschlagventilkörper relativ zu dem Rückschlagventilsitz zwischen einer Öffnungsstellung und einer Schließstellung bewegen kann. Hierbei ist die weitere Hülse benachbart zu dem Rückschlagventilsitz angeordnet. Für diese konstruktive Ausgestaltung bildet das Betätigungselement den Sperrventilkörper in Form eines Sperrventiltellers aus. Der Sperrventilkörper ist in diesem Fall axial zwischen den beiden genannten Hülsen angeordnet. In Abhängigkeit von der fluidischen Beaufschlagung des Felgen-Anschlusselements ist der Rückschlagventilkörper in der weiteren Hülse zwischen dem Rückschlagventilsitz und einem Anschlag bewegbar, wobei der Anschlag von dem Betätigungselement ausgebildet ist. Die Ausnehmung ist über einen vorzugsweise sich radial von der Ausnehmung bis zu Mantelfläche erstreckenden Kanal mit einer Mantelfläche des ersten Gehäuseteils verbunden. Das erste Gehäuseteil ist in eine Ausnehmung, insbesondere Bohrung, eines zweiten Gehäuseteils eingesetzt. Zwischen den beiden Gehäuseteilen ist ein Ringraum gebildet, in welchen der von der Ausnehmung ausgehende Kanal einmündet. Über einen weiteren Kanal ist der Ringraum mit dem Eingangsanschluss des Felgen-Anschlusselements verbunden.

Weitere Vorschläge der Erfindung betreffen die Ausgestaltung der Achskörper-Drehdurchführung:
Grundsätzlich kann diese mit oder ohne Filterelement ausgebildet sein. Für einen Vorschlag der Erfindung ist stromaufwärts des ersten Übertrittsquerschnitts und des zweiten Übertrittsquerschnitts mindestens ein Filterelement angeordnet. Hierbei kann in den beiden parallelen Leitungszweigen mit den Übertrittsquerschnitten jeweils ein Filterelement angeordnet sein. Vorzugsweise befindet sich aber ein einziges Filterelement (oder auch mehrere nachgeschaltete Filterelemente) in einem zentralen Leitungszweig, welcher stromaufwärts der Verzweigung zu den beiden Übertrittsquerschnitten angeordnet ist. Dieses Filterelement kann somit zwischen dem Eingangsanschluss der Achskörper-Drehdurchführung und den beiden Übertrittsquerschnitten angeordnet sein.

Für die konstruktive Ausgestaltung der beiden Übertrittsquerschnitte gibt es vielfältige Möglichkeiten. Für eine erfindungsgemäße Ausführungsform ist der erste Übertrittsquerschnitt von einer (beliebig geformten, insbesondere abgestuften) Durchgangsbohrung eines Ventilkörpers des Drucksicherungsventils ausgebildet. Alternativ oder kumulativ möglich ist, dass der zweite Übertrittsquerschnitt von einem Ringspalt ausgebildet ist, der radial innenliegend von dem Ventilkörper des Drucksicherungsventils begrenzt ist, während der Ringspalt radial außenliegend von einer Ausnehmung eines Gehäuses oder eines Einsatzes des Gehäuses der Achskörper-Drehdurchführung begrenzt ist.

Um lediglich beispielhaft eine andere, von der Erfindung umfasste Möglichkeit zu nennen, können die beiden Übertrittsquerschnitte ineinander übergehen, so dass in der Öffnungsstellung des Drucksicherungsventils eine durchgehende Übertrittsquerschnittsfläche von den beiden Übertrittsquerschnitten gebildet wird. Hingegen verringert sich die Übertrittsquerschnittsfläche mit der Schließung des Drucksicherungsventils auf die Querschnittsfläche des ersten Übertrittsquerschnitts. So kann beispielsweise der Ventilkörper des Drucksicherungsventils, welcher innen liegend den Ringspalt begrenzt, eine radiale Ausnehmung oder einen außen liegenden Kanal aufweisen, so dass in der Schließstellung des Ventilkörpers grundsätzlich der Ringspalt geschlossen wird, aber über den den ersten Übertrittsquerschnitt bildenden Kanal oder die Ausnehmung in der Schließstellung des Drucksicherungsventils noch ein verbleibender Reststrom der Druckluft ermöglicht ist.

Für die Gestaltung des ersten Übertrittsquerschnitts gibt es hinsichtlich der Übertrittsquerschnittsfläche sowie auch der Konturgestaltung des Übertrittsquerschnitts in Strömungsrichtung vielfältige beliebige Möglichkeiten. Vorzugsweise ist der erste Übertrittsquerschnitt um den Faktor 5, 10, 20, 50 oder sogar 100 kleiner als der zweite Übertrittsquerschnitt. Vorzugsweise ist der erste Übertrittsquerschnitt von einer Drosselbohrung ausgebildet, welche auch als abgestufte Drosselbohrung ausgebildet sein kann.

Grundsätzlich kann das Drucksicherungsventil eine beliebige Öffnung- und/oder Schließcharakteristik aufweisen. Für einen besonderen Vorschlag der Erfindung besitzt das Drucksicherungsventil eine Schalthysterese, womit eine besonders zuverlässige Gewährleistung der Drucksicherung und unter Umständen auch eine schnelle Herbeiführung einer Öffnungsstellung des Drucksicherungsventils und/oder die zuverlässige Aufrechterhaltung derselben erfolgen kann.

Auch die Gestaltung der Übertrittsquerschnitte und Drosselcharakteristika des Felgen-Anschlusselements und der Achskörper-Drehdurchführung kann grundsätzlich beliebig sein. Für eine Ausgestaltung der Erfindung ist allerdings eine Gesamt-Drosselwirkung des Felgen-Anschlusselements größer als eine Gesamt-Drosselwirkung der Achskörper-Drehdurchführung. Diese Ausgestaltung der Erfindung kann beispielsweise auf der Erkenntnis beruhen, dass einerseits die Schließung des Drucksicherungsventils der Achskörper-Drehdurchführung für einen Abriss des Schlauches gewährleistet werden soll, während das Drucksicherungsventil der Achskörper-Drehdurchführung seine Öffnungsstellung einnehmen oder beibehalten soll, wenn der Reifen leer ist oder lediglich mit einem kleinen Druck beaufschlagt ist. Für beide genannten Betriebszustände ist aber grundsätzlich der Druck an der Ausgangsseite des Drucksicherungsventils klein, sodass eine Unterscheidung dieser beiden Betriebszustände und die Herbeiführung der erforderlichen Betriebsstellung des Drucksicherungsventils nicht ohne weiteres möglich ist. Ist aber die Gesamt-Drosselwirkung des Felgen-Anschlusselements größer als eine Gesamt-Drosselwirkung der Achskörper-Drehdurchführung, strömt für einen leeren Reifen ein großer Strom von Druckluft durch die Achskörper-Drehdurchführung. Angesichts der verhältnismäßig großen Gesamt-Drosselwirkung des Felgen-Anschlusselements baut sich stromaufwärts des Felgen-Anschlusselements ein größerer Druck auf, welcher dann auf die Ausgangsseite des Drucksicherungsventils wirkt, sodass dieser das Drucksicherungsventil in seiner Öffnungsstellung halten kann. Hingegen ist ein derartiger Druckaufbau auf der Ausgangsseite des Drucksicherungsventils im Fall einer Leckage nicht möglich, sodass in diesem Fall das Drucksicherungsventil seine Schließstellung einnehmen kann. Vorzugsweise ist die Gesamt-Drosselwirkung des Felgen-Anschlusselements mehr als 40 %, mehr als 50 % oder mehr als 60 % größer als die Gesamt-Drosselwirkung der Achskörper-Drehdurchführung. Möglich ist auch, dass ein Öffnung- oder Übertrittsquerschnitt des Rückschlagventils des Felgen-Anschlusselements mehr als 40 %, mehr als 50 % oder mehr als 60 % kleiner ist als der zweite Übertrittsquerschnitt der Achskörper-Drehdurchführung.

Für einen besonderen Vorschlag der Erfindung ist die Reifen-Druckbeaufschlagungseinrichtung als Reifen-Nachfülleinrichtung ausgebildet, mittels welcher ein konstanter Reifendruck gewährleistet wird, indem bei einer natürlichen, unter Umständen geringfügigen und/oder langsamen Leckage ein Nachfüllen von Druckluft in den Reifen erfolgt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Reifen-Druckbeaufschlagungseinrichtung in an einer Felge und einem Achskörper montiertem Zustand.
- **Fig. 2**: zeigt in geschnittener Darstellung eine Achskörper-Drehdurchführung der Reifen-Druckbeaufschlagungseinrichtung gemäß Fig. 1 in einer Betriebsstellung ohne Leckage oder Abriss eines Schlauches.
- **Fig. 3**: zeigt die Achskörper-Drehdurchführung gemäß Fig. 2 für eine Leckage oder einen Abriss des Schlauches.
- **Fig. 4**: zeigt in einer geschnittenen Darstellung ein Felgen-Anschlusselement, welches an einem felgenseitigen Kopplungskörper montiert ist, in einer Öffnungsstellung eines Sperrventils und eines Rückschlagventils, sodass in dieser Betriebsstellung eine Nachfüllung eines Reifens möglich ist.
- **Fig. 5**: zeigt das Felgen-Anschlusselement gemäß Fig. 4 in einer Öffnungsstellung des Sperrventils und einer Schließstellung des Rückschlagventils für einen defekten oder abgerissenen Schlauch, sodass in dieser Betriebsstellung ein entweichen von Druckluft aus dem Reifen nicht erfolgt.
- **Fig. 6**: zeigt das Felgen-Anschlusselement gemäß Fig. 4 und 5 in von dem felgenseitigen Kopplungskörper demontiertem Zustand, wobei sich das Sperrventil in seiner Schließstellung befindet, während das Rückschlagventil in einer Öffnungsstellung ist, sodass in dieser Betriebsstellung keine Druckluft aus dem Schlauch entweichen kann.

### FIGURENBESCHREIBUNG

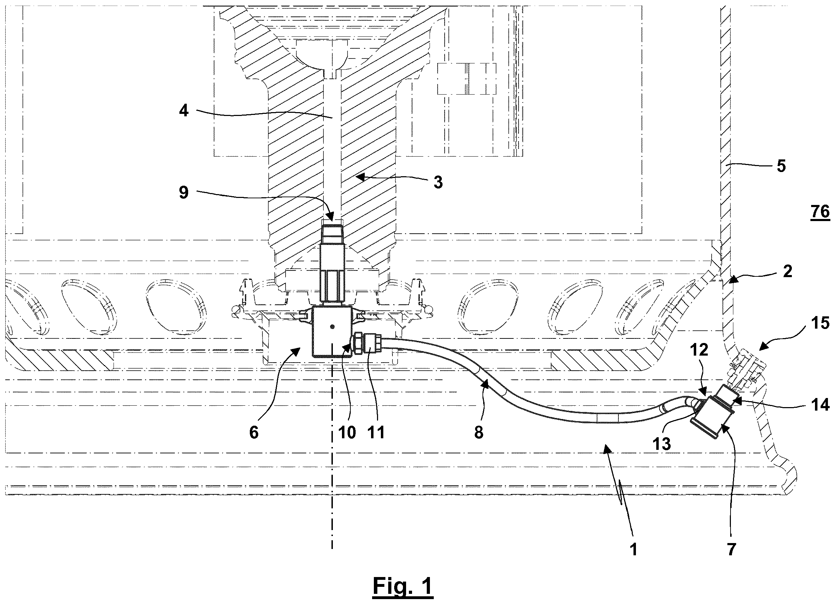

In **Fig. 1** ist eine Reifen-Druckbeaufschlagungseinrichtung 1 in einer beispielhaft ausgewählten Einbauumgebung, hier mit einer gestrichelt dargestellten Felge 2 und einem nicht mit der Felge 2 rotierenden Achskörper 3, dargestellt. Die Reifen-Druckbeaufschlagungseinrichtung 1 kann aber im Rahmen der Erfindung auch in beliebigen anderen Einbauumgebungen (vgl. den eingangs angeführten Stand der Technik, welcher diesbezüglich zum Gegenstand der vorliegenden Anmeldung gemacht wird) verwendet werden, sofern ein beliebige ausgestalteter, nicht mit der Felge 2 rotierender Achskörper vorhanden ist. Vorzugsweise ist gegenüber dem Achskörper 3 die Felge, ggf. über eine geeignete Nabe und unter Zwischenschaltung von Lagern, in an sich bekannter Weise drehbar gelagert.

Der Achskörper 3 verfügt über einen Kanal oder eine Leitung 4. In der Leitung 4 steht Druckluft an, welche zur Befüllung eines Innenraums 76, welcher von einem Felgenbett 5 der Felge 2 und einem in Fig. 1 nicht dargestellten, mit der Felge 2 montierten Reifen begrenzt ist, bestimmt ist. Diese Druckluft stammt von einer Druckluftquelle des Fahrzeugs. Beispielsweise kann eine Druckluftanlage des Fahrzeugs eine Druckluftaufbereitungseinrichtung aufweisen, über die mehrere Kreise (wie insbesondere Betriebsbremskreise, einen Luftfederungskreis, Nebenverbraucherkreise u. ä.) mit Druckluft (unter Umständen mit unterschiedlichen Betriebsdrücken) versorgt werden, wobei ein Kreis dann für die Versorgung der Räder mit Druckluft bestimmt ist. Hierbei können Leitungen 4 für unterschiedliche Räder, Räder an unterschiedlichen Achsen oder Räder auf unterschiedlichen Seiten über gemeinsame oder unterschiedliche Leitungen mit gleichen oder unterschiedlichen Drücken beaufschlagt werden.

Wenn im Folgenden von einem Anschluss oder ...anschluss die Rede ist, verfügt dieser Anschluss einerseits über eine mechanische Verbindung, um die angeschlossenen Bauelemente mechanisch miteinander zu verbinden, insbesondere aneinander zu befestigen. Darüber hinaus bildet ein derartiger Anschluss auch eine pneumatische Verbindung aus, über welche (unter Abdichtung gegenüber der Umgebung) ein Übertritt von Druckluft zwischen den aneinander angeschlossenen Bauelementen ermöglicht wird.

Die Reifen-Druckbeaufschlagungseinrichtung 1 weist drei Baueinheiten auf, nämlich eine Achskörper-Drehdurchführung 6, ein Felgen-Anschlusselement 7 und einen Schlauch 8, über welchen die Achskörper-Drehdurchführung 6 pneumatisch mit dem Felgen-Anschlusselement 7 verbunden ist und über welchen der Abstand zwischen der Achskörper-Drehdurchführung 6 und dem Felgen-Anschlusselement 7 überbrückt ist.

Die Achskörper-Drehdurchführung 6 verfügt über einen Eingangsanschluss 9, über welchen die Achskörper-Drehdurchführung 6 mechanisch mit dem Achskörper 3 verbunden ist und pneumatisch mit dem Kanal 4 kommuniziert. Des Weiteren verfügt die Achskörper-Drehdurchführung 6 über einen Ausgangsanschluss 10, über den die Achskörper-Drehdurchführung mechanisch mit dem Schlauch 8, nämlich mit einer Schlauchschelle oder Schlauchverbindung 11 oder einer Überwurfmutter 75, verbunden ist und die Achskörper-Drehdurchführung 6 auch pneumatisch mit dem Schlauch 8 kommuniziert.

Das Felgen-Anschlusselement 7 verfügt über einen Eingangsanschluss 12, über welchen dieses mechanisch, hier mittels einer Schlauchverbindung oder Schlauchschelle 13 oder Überwurfmutter 67, mit dem Schlauch 8 verbunden ist und pneumatisch mit dem Schlauch 8 kommuniziert. Des Weiteren verfügt das Felgen-Anschlusselement 7 über einen Ausgangsanschluss 14, über den das Felgen-Anschlusselement 7 mechanisch, hier mittelbar über einen Kopplungskörper 15, mit der Felge 2 im Bereich des Felgenbetts 5 verbunden ist und pneumatisch, hier durch den Kopplungskörper 15 sowie eine Ausnehmung des Felgenbetts 5 hindurch, mit dem von dem Felgenbett 5 und dem Reifen begrenzten Innenraum 76 kommuniziert.

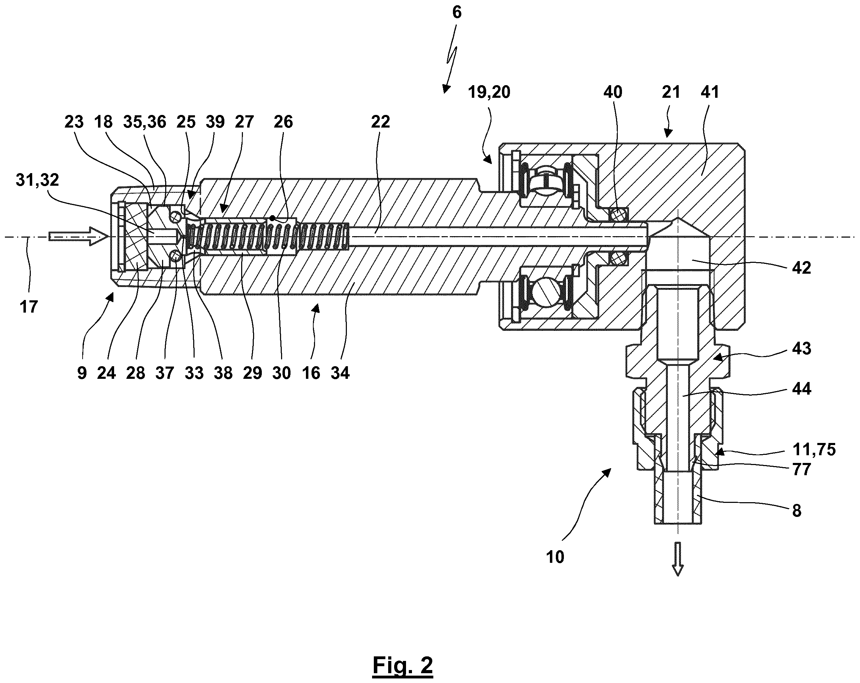

Fig. 2 zeigt eine Achskörper-Drehdurchführung 6 in einem Längsschnitt. Die Achskörper-Drehdurchführung 6 weist einen Stator 16 auf, welcher koaxial zu einer Längsachse 17 des Achskörpers 3, welche der Rotationsachse der Felge 2 entspricht, angeordnet ist. Für die mechanische Befestigung des Stators 16 an dem Achskörper 3 weist der Eingangsanschluss 9 der Achskörper-Drehdurchführung 6 in dem dem Achskörper 3 zugewandten Endbereich des Stators 16 ein Außengewinde 18 auf. Mit dem Außengewinde 18 ist der Stator 16 in ein entsprechendes Innengewinde des Achskörpers 3, in welches der Kanal 4 mündet, einschraubbar. In dem anderen Endbereich des Stators 16 ist über ein Lager 19, hier ein Wälzlager 20, an dem Stator 16 verdrehbar um die Längsachse 17 ein Rotor 21 gelagert.

Der Stator 16 ist langgestreckt, beispielsweise stabartig mit einem abgestuften Längsschnitt und kreisförmigen Querschnitten, ausgebildet und verfügt über eine in Richtung der Längsachse 17 durchgehende Ausnehmung 22, welche als abgestufte Bohrung ausgebildet ist, deren Durchmesser sich in Richtung des Rotors 21 in Stufen verringert.

Im Bereich des Eingangsanschlusses 9 bildet die Ausnehmung 22 eine Eingangskammer 23 aus, durch welche sich ein Filterelement 24 erstreckt. Für das dargestellte Ausführungsbeispiel ist das Filterelement 24 als Filterscheibe ausgebildet, welche sich in eine Richtung der Längsachse 17 an einem Absatz des Stators 16 abstützt, während diese in die andere Richtung durch einen Sicherungsring gesichert ist.

Die Eingangskammer 23 geht über einen hier konusförmigen Ventilsitz 25 über in eine Führungsbohrung 26, deren Durchmesser kleiner ist als der Durchmesser der Eingangskammer 23. Von der Eingangskammer 23 in die Führungsbohrung 26 erstreckt sich ein Ventilkörper 27, der in erster Näherung im Längsschnitt T-förmig oder pilzartig ausgebildet ist. Der Querschenkel des T bildet einen Ventilkörperteller 28, der in der Eingangskammer 23 angeordnet ist. Hingegen bildet der Vertikalschenkel des T eine Führungshülse 29, die gleitend in der Führungsbohrung 26 geführt ist. An dem Ventilkörperteller 28 ist eine Feder 30 abgestützt, welche sich durch die Führungshülse 29 erstreckt und in dem dem Ventilkörperteller 28 abgewandten Endbereich an einem Absatz der Ausnehmung 22 abgestützt ist.

In Richtung der Längsachse 17 erstreckt sich durch den Ventilkörper 27 eine Ausnehmung 31, welche somit einen ersten Übertrittsquerschnitt 32 bereitstellt. Die Ausnehmung 31 ist hierbei gebildet mit einer Drosselbohrung 33, welche von der dem Eingangsanschluss 9 zugewandten Stirnseite des Ventilkörpers 27 ausgeht und einmündet in die Innenbohrung der Führungshülse 29. Zwischen einer Innenbohrung eines Gehäuses 34 des Stators 16 im Bereich der Eingangskammer 23 und der Mantelfläche des Ventilkörpertellers 28 ist ein Ringspalt 35 gebildet, welcher einen zweiten Übertrittsquerschnitt 36 bereitstellt. Auf der Seite, die dem von dem Gehäuse 34 ausgebildeten Ventilsitz 25 zugewandt ist, verfügt der Ventilkörperteller 28 über ein Dichtelement 37, welches hier als Dichtring ausgebildet ist, aber auch als dichtende Beschichtung des Ventilkörpertellers 28 ausgebildet sein kann.

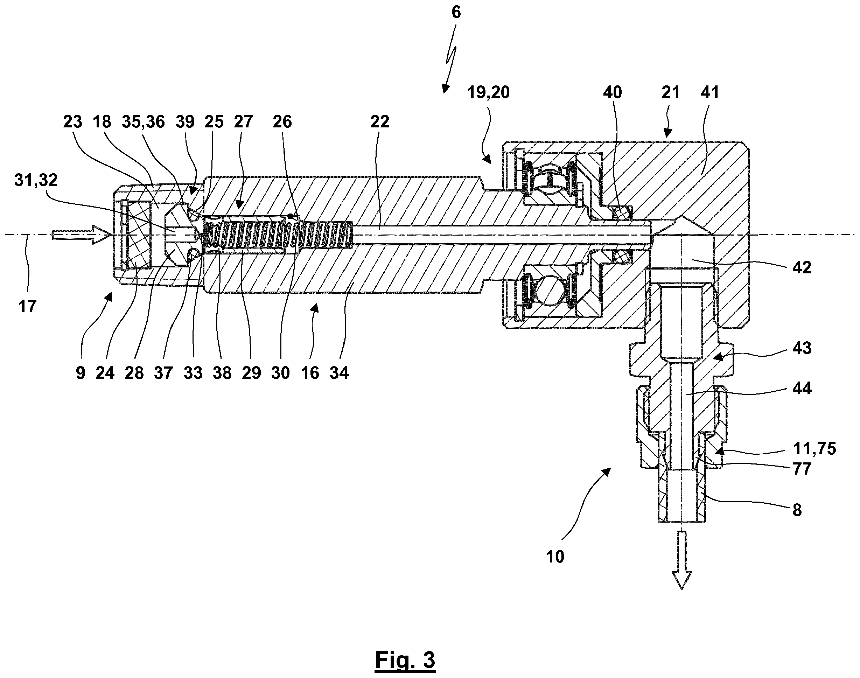

In der Ausnehmung 22 ist der Ventilkörper 27 axial in Richtung der Längsachse 17 verschieblich zwischen einer Öffnungsstellung gemäß Fig. 2 und einer Schließstellung gemäß Fig. 3. Hierbei wird der Ventilkörper 27 auf der dem Eingangsanschluss 9 zugewandten Seite mit dem an dem Eingangsanschluss anliegenden Druck beaufschlagt, woraus eine Druckkraft resultiert, welche in Richtung der Schließstellung wirkt. Hingegen wirken auf der anderen Seite auf den Ventilkörper 27 einerseits eine Druckkraft, welche infolge des Druckes an dem Ausgangsanschluss 10 auf die durch die Querschnittsfläche der Führungshülse 29 vorgegebene Wirkfläche des Ventilkörpers 27 erzeugt wird, sowie andererseits die Druckkraft der Feder 30. Eine Dimensionierung der Flächen des Ventilkörpers 27, welche den genannten Drücken ausgesetzt sind, sowie der Feder 30 erfolgt derart, dass für einen hinreichend großen Druck an dem Ausgangsanschluss 10 die Druckkraft infolge dieses Druckes sowie die Kraft der Feder 30 überwiegen gegenüber der Druckkraft, welche der Druck an dem Eingangsanschluss 9 an dem Ventilkörper 27 erzeugt. Für einen derartigen, hinreichend großen Druck an dem Ausgangsanschluss 10 befindet sich der Ventilkörper 27 in der in Fig. 2 dargestellten Öffnungsstellung. Bricht hingegen der Druck an dem Ausgangsanschluss 10 infolge einer Leckage des Schlauches 8 oder eine Abrisses desselben ein, reduziert sich die von diesem Druck an dem Ventilkörper 27 erzeugte Druckkraft. Diese Druckkraft und die Kraft der Feder 30 sind dann kleiner als die Druckkraft, welche von dem Druck an dem Eingangsanschluss 9 an dem Ventilkörper 27 erzeugt wird, womit eine Bewegung des Ventilkörpers 27 in die in Fig. 3 wirksame Schließstellung erfolgt.

Für das dargestellte Ausführungsbeispiel wirken in der Schließstellung gemäß Fig. 3 einerseits der Druck an dem Ausgangsanschluss 10 und andererseits der Druck an dem Eingangsanschluss 9 in entgegengesetzte Richtungen jeweils mit ungefähr gleichen Wirkflächen, die durch den Radius des Dichtelements 37 vorgegeben sind, auf den Ventilkörper 27. Hingegen wirken in der Öffnungsstellung gemäß Fig. 2 einerseits der Druck an dem Ausgangsanschluss 10 und andererseits der Druck an dem Eingangsanschluss 9 in entgegengesetzte Richtungen jeweils mit ungefähr gleichen Wirkflächen, die durch den Außenradius des Ventilkörpertellers 28 vorgegeben sind, auf den Ventilkörper 27. Somit verändern sich unter Umständen mit einer Bewegung des Ventilkörpers 27 von der Schließstellung in Öffnungsrichtung die Wirkflächen sprungartig, woraus für eine erfindungsgemäße Ausgestaltung eine Schalthysterese resultieren kann.

In der Öffnungsstellung teilt sich dem Eingangsanschluss 9 zugeführte Druckluft nach dem Durchströmen des Filterelements 24 auf in zwei Teilströme. Ein erster Teilstrom durchströmt die Ausnehmung 31 mit dem ersten Übertrittsquerschnitt 32 sowie der Drosselbohrung 33, strömt dann durch die Innenbohrung der Führungshülse 29 mit dann erfolgender weiterer Durchströmung des Stators 16. Ein zweiter Teilstrom strömt durch den Ringspalt 35 und den von diesem gebildeten zweiten Übertrittsquerschnitt 36. Auf der dem Ventilkörperteller 28 abgewandten Seite gelangt dieser Teilstrom durch eine Querbohrung 38 in den Innenraum der Führungshülse 29, von wo auch dieser Teilstrom den Stator 16 weiter durchströmen kann. In dem Innenraum der Führungshülse 29 vereinigen sich somit die beiden Teilströme wieder.

Hingegen kommt in der Schließstellung gemäß Fig. 3 der Ventilkörperteller 28 mit dem Dichtelement 37 zur dichtenden Anlage an den Ventilsitz 25, womit der zweite Übertrittsquerschnitt 36 geschlossen wird. Somit kann in diesem Fall Druckluft ausschließlich durch die Ausnehmung 31, den ersten Übertrittsquerschnitt 32 und die Drosselbohrung 33 den Stator 16 durchströmen.

Mit dem Ventilkörper 27 und dem von dem Gehäuse 34 ausgebildeten Ventilsitz 25 ist ein Drucksicherungsventil 39 gebildet. Dieses lässt eine Strömung von Druckluft zu dem Reifen durch die Achskörper-Drehdurchführung 6 zu, wenn im Bereich des Ausgangsanschlusses 10 ein hinreichender Druck anliegt, während für einen Defekt oder einen Abriss des Schlauches 8 eine Drucksicherung dadurch erfolgt, dass das Drucksicherungsventil 39 seine Schließstellung einnimmt, womit vermieden ist, dass (bis auf einen gewollten, aber begrenzten Reststrom, der den ersten Übertrittsquerschnitt 32 durchströmt) weitere Druckluft die Achskörper-Drehdurchführung 6 durchströmt und über den angerissenen oder defekten Schlauch 8 in die Umgebung strömt.

In dem dem Eingangsanschluss 9 abgewandten Endbereich mündet die Ausnehmung 22 unter Abdichtung durch ein Dichtelement 40, welches zwischen einer Mantelfläche des Endbereichs des Stators 16 und einer Innenfläche eines Gehäuses 41 des Rotors 21 verspannt ist, in eine von dem Gehäuse 41 gebildete Ausgangskammer 42. Die Ausgangskammer 42 ist pneumatisch mit dem Ausgangsanschluss 10 verbunden. Für das hier dargestellte Ausführungsbeispiel ist mit der Ausgangskammer 42 ein Anschlussstutzen 43 verschraubt, der von einer abgestuften Durchgangsbohrung 44 durchsetzt ist. Der Anschlussstutzen 43 weist eine sich beispielsweise konusförmig erweiternde Mantelfläche 77 auf, auf welche unter elastischer und/oder plastischer Aufweitung der Schlauch 8 aufschiebbar ist. In diesem aufgeschobenen Zustand kann der Schlauch 8 über die Schlauchverbindung 11 oder eine Überwurfmutter 75, die mit einem Gewinde des Anschlussstutzens 43 verschraubt ist, gesichert werden.

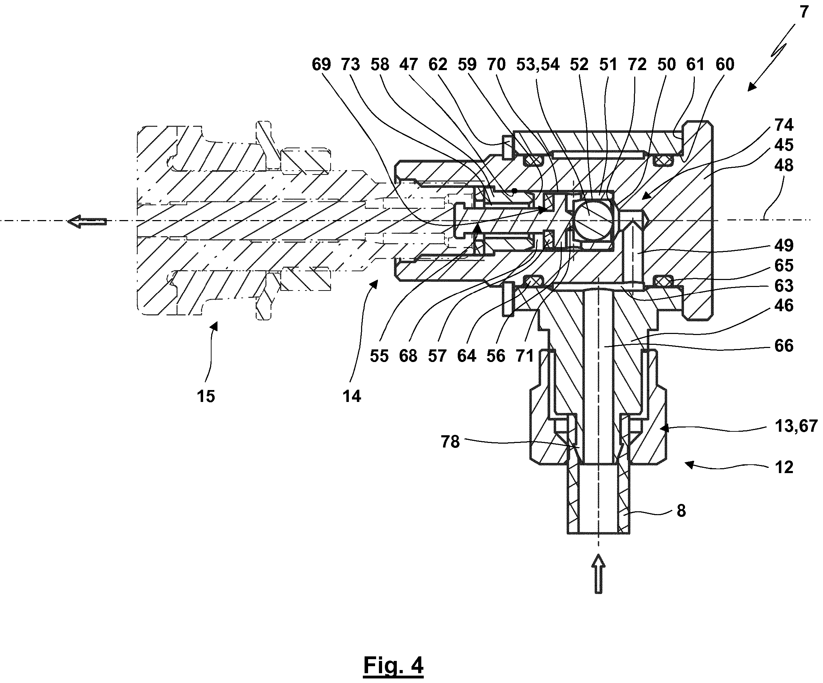

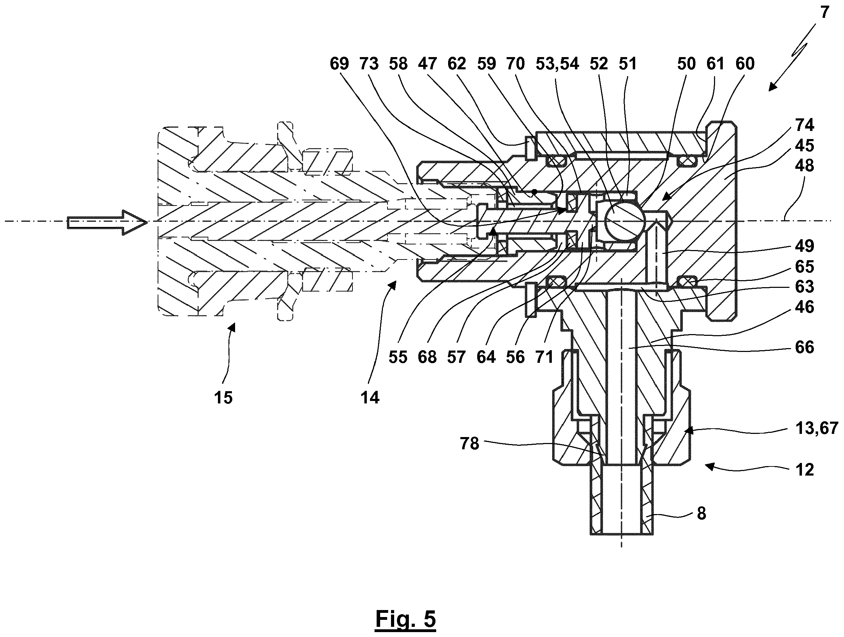

In den **Fig. 4 bis 6** ist ein Felgen-Anschlusselement 7 mit durchgezogenen Linien geschnitten dargestellt, während in den Fig. 4 und 5 ein Kopplungskörper 15, an welchem hier das Felgen-Anschlusselement 7 montiert ist, gestrichelt und mit kleinerer Strichstärke dargestellt ist.

Gemäß Fig. 4 weist das Felgen-Anschlusselement 7 zwei Gehäuseteile 45, 46 auf. Das Gehäuseteil 45 verfügt über eine sacklochartige Ausnehmung 47, welche in Richtung einer Längsachse 48 orientiert ist. In den innen liegenden Endbereich der Ausnehmung 47 mündet eine quer zur Längsachse 48 orientierte, von der Mantelfläche des Gehäuseteils 45 ausgehende Querbohrung oder ein Kanal 49. Benachbart der Einmündung der Querbohrung 49 in die Ausnehmung 47 bildet eine hier konusförmige Erweiterung des Querschnitts einen Rückschlagventilsitz 50 aus. An einem dem Rückschlagventilsitz 50 benachbarten Absatz der Ausnehmung 47 stützt sich eine Hülse 51 ab. In der Hülse 51 ist axial verschieblich und unter Ausbildung eines Ringspaltes 52 ein Rückschlagventilkörper 53 axial in Richtung der Längsachse 48 geführt. Für das dargestellte Ausführungsbeispiel ist der Rückschlagventilkörper 53 als Kugel 54 ausgebildet.

Auf der dem Rückschlagventilsitz 50 abgewandten Seite des Rückschlagventilkörpers 53 erstreckt sich in der Ausnehmung 47 ein Betätigungselement 55. Das Betätigungselement 55 ist in erster Näherung entsprechend einem liegenden T ausgebildet, wobei der Vertikalschenkel des liegenden T auf der dem Rückschlagventilkörper 53 zugewandten Seite angeordnet ist. Der Vertikalschenkel des T bildet einen Sperrventilkörper 56, wobei dieser auf der dem Rückschlagventilkörper 53 abgewandten Seite mit einem Dichtelement 57 oder einer dichtenden Beschichtung ausgestattet sein kann. Der Horizontalschenkel des liegenden T des Betätigungselements 55 erstreckt sich durch eine Hülse 58 und kragt aus dem Ausgangsanschluss 14 oder in diesen hinein, so dass der Endbereich des Betätigungselements 55 mit dem Kopplungskörper 15 in Wechselwirkung treten kann. Die dem Sperrventilkörper 56 zugewandte Stirnseite der Hülse 58 bildet einen Sperrventilsitz 59 aus.

Das Gehäuseteil 45 ist in eine Durchgangsausnehmung 60 des Gehäuseteils 46 eingesetzt. Das Gehäuseteil 45 ist in der Durchgangsausnehmung 60 zwischen einem Absatz 61 des Gehäuseteils 46 und einem an dem Gehäuseteil 45 gehaltenen Sicherungsring 62 gefangen. Zwischen den Gehäuseteilen 45, 46 ergibt sich ein Ringraum 63, der über Dichtelemente 64, 65 nach außen abgedichtet ist.

In den Ringraum 63 mündet einerseits die Querbohrung 49 des Gehäuseteils 45. Andererseits mündet in den Ringraum 63 eine Bohrung oder ein Kanal 66 des Gehäuseteils 46, die oder der in den Eingangsanschluss 12 mündet.

Für das dargestellte Ausführungsbeispiel verfügt der Eingangsanschluss 12 über eine hier konusförmige Anschlussfläche 78, auf welche unter elastischer oder plastischer Aufweitung der Schlauch 8 aufschiebbar ist. Eine Sicherung des Schlauches 8 an dem Gehäuseteil 46 in derart aufgeschobenem Zustand erfolgt dadurch, dass auf das Gehäuseteil 45 eine Schlauchverbindung 13 oder eine Überwurfmutter 67 aufgeschraubt ist mit einem Einspannen des Schlauches 8 zwischen der Anschlussfläche 78 und der Überwurfmutter 67.

Die Funktionsweise des Felgen-Anschlusselements 7 ist wie folgt:
Ist das Felgen-Anschlusselement 7 gemäß Fig. 4 sowohl im Bereich des Ausgangsanschlusses 14 mit dem Felgenbett 7 einer Felge 2, hier über einen Kopplungskörper 15, und damit dem Innenraum 76 des Reifens verbunden als auch im Bereich des Eingangsanschlusses 12 mit einem nicht defekten oder abgerissenen Schlauch 8 verbunden, wird (hier durch den Kopplungskörper 15) mechanisch und bewegungsgesteuert das Betätigungselement 55 in die Ausnehmung 47 und in Richtung des Rückschlagventilsitzes 50 verschoben. Dies hat zur Folge, dass sich ein Übertrittsquerschnitt 68 zwischen dem Sperrventilsitz 59 und dem Sperrventilkörper 56 mit Dichtelement 57 ergibt. Ein Sperrventil 69, welches mit dem Sperrventilsitz 59 und dem Sperrventilkörper 56 mit Dichtelement 57 gebildet ist, nimmt somit seine Öffnungsstellung ein, in der Druckluft über den Übertrittsquerschnitt 68 strömen kann. Zwischen dem Sperrventilkörper 56 und dem Dichtelement 57 und der Innenwandung der Ausnehmung 47 ergibt sich ein Ringraum 70, über welchen eine Umströmung des Sperrventilkörpers 56 mit Dichtelement 57 in geöffnetem Zustand des Sperrventils 69 möglich ist.

Im Bereich einer dem Rückschlagventilkörper 53 zugewandten Stirnseite bildet das Betätigungselement 55 einen Anschlag 71 aus. Zwischen dem Anschlag 71 und dem Rückschlagventilsitz 50 verfügt der Rückschlagventilkörper 53 über eine begrenzte Beweglichkeit in Richtung der Längsachse 48. Steht an dem Eingangsanschluss 12 des Felgen-Anschlusselements 7 ein größerer Druck an als an dem Ausgangsanschluss 14 (und vorzugsweise als in dem Reifen), führt die Drosselung des Stroms der Druckluft im Bereich des Ringspalts 52 dazu, dass auf der dem Eingangsanschluss 12 zugewandten Seite der Rückschlagventilkörper 53 mit einem größeren Druck beaufschlagt ist als auf der dem Ausgangsanschluss 14 zugewandten Seite. Dies hat zur Folge, dass der Rückschlagventilkörper 53 die in Fig. 4 wirksame Stellung einnimmt, in welcher dieser an dem Anschlag 71 anliegt und beabstandet von dem Rückschlagventilsitz 50 angeordnet ist. Somit kann Druckluft von dem Schlauch 8 über den Eingangsanschluss 12, die Bohrung 66, den Ringraum 63, die Querbohrung 49, einen zwischen dem Ventilsitz 50 und dem Rückschlagventilkörper 53 geschaffenen Übertrittsquerschnitt 72, den Ringraum 52, den Ringraum 70, den Übertrittsquerschnitt 68 und einen Ringraum 73 zwischen dem Horizontalschenkel des T des Betätigungselements 55 und der Hülse 58 zu dem Ausgangsanschluss 14 strömen. Bricht hingegen der Druck an dem Eingangsanschluss 12 infolge eines Abrisses oder eine Leckage des Schlauches 8 ein, ist der Druck, der auf der dem Ausgangsanschluss 14 zugewandten Seite auf den Rückschlagventilkörper 53 wirkt, größer als der Druck, welcher auf der dem Eingangsanschluss 12 zugewandten Seite auf den Rückschlagventilkörper 53 wirkt. Dies hat zur Folge, dass sich der Rückschlagventilkörper 53 von dem Anschlag 71 weg bewegt und zur Anlage an den Rückschlagventilsitz 50 kommt, womit ein mit dem Rückschlagventilkörper 53 und dem Rückschlagventilsitz 50 gebildetes Rückschlagventil 74 seine Sperrstellung einnimmt. Somit kann nicht Druckluft von dem Reifen über das Felgen-Anschlusselement 7 über den defekten Schlauch 8 in die Umgebung austreten (vgl. Fig. 5).

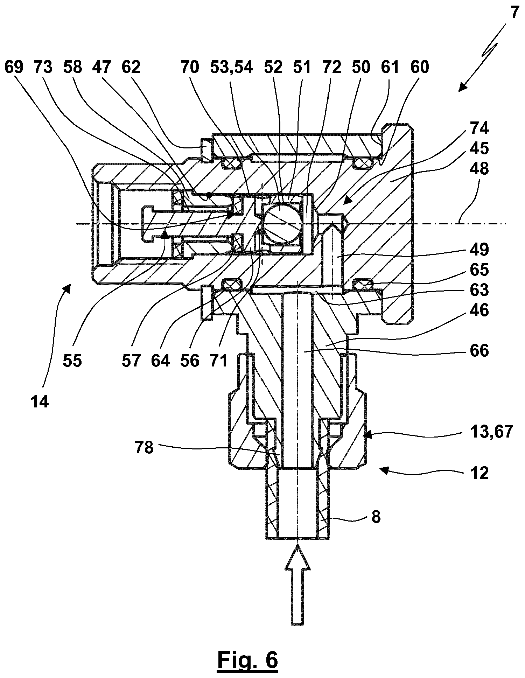

Ist, wie in Fig. 6 dargestellt, das Felgen-Anschlusselement 7 von der Felge 2, hier dem Kopplungskörper 15, demontiert, ist der Ausgangsanschluss 14 drucklos, während für einen über die Achskörper-Drehdurchführung 6 mit einer Druckquelle eines Achskörpers 3 gekoppelten Schlauch der Eingangsanschluss 12 druckbeaufschlagt ist. Infolge des an dem Eingangsanschluss 12 wirkenden Drucks wird der Rückschlagventilkörper 53 in Richtung des Ausgangsanschlusses 14 beaufschlagt, so dass sich dieser von dem Rückschlagventilsitz 50 weg bewegen kann. Der Rückschlagventilkörper 53 kommt zur Anlage an den Anschlag 71 des Betätigungselements 55. Der an dem Rückschlagventilkörper 53 wirkende Druck des Eingangsanschlusses 12 erzeugt aber eine Druckkraft, welche das Betätigungselement 55 mit dem Sperrventilkörper 56 und dem Dichtelement 57 gegen den Sperrventilsitz 59 presst, womit das Sperrventil 69 seine Sperrstellung einnimmt. Infolge der Sperrstellung des Sperrventils 69 kann keine Druckluft von dem Eingangsanschluss 12 über den Ausgangsanschluss 14 in die Umgebung austreten.

Mittels der erfindungsgemäßen Reifen-Druckbeaufschlagungseinrichtung 1 kann zuverlässig
a) mittels des Felgen-Anschlusselements 7 eine Entleerung des Reifens bei einer Leckage oder einem Abriss des Schlauches 8 sowie
b) mittels der Achskörper-Drehdurchführung 6 eine Entleerung der Druckquelle über den Kanal oder die Leitung 4 bei einer Leckage oder einem Abriss des Schlauches 8 unterbunden werden.

### BEZUGSZEICHENLISTE

1 Reifen-Druckbeaufschlagungseinrichtung
2 Felge
3 Achskörper
4 Kanal, Leitung
5 Felgenbett
6 Achskörper-Drehdurchführung
7 Felgen-Anschlusselement
8 Schlauch
9 Eingangsanschluss (Achskörper-Drehdurchführung)
10 Ausgangsanschluss (Achskörper-Drehdurchführung)
11 Schlauchverbindung, Schlauchschelle
12 Eingangsanschluss (Felgen-Anschlusselement)
13 Schlauchverbindung, Schlauchschelle
14 Ausgangsanschluss (Felgen-Anschlusselement)
15 Kopplungskörper
16 Stator
17 Längsachse
18 Außengewinde
19 Lager
20 Wälzlager
21 Rotor
22 Ausnehmung
23 Eingangskammer
24 Filterelement
25 Ventilsitz
26 Führungsbohrung
27 Ventilkörper
28 Ventilkörperteller
29 Führungshülse
30 Feder
31 Ausnehmung
32 erster Übertrittsquerschnitt
33 Drosselbohrung
34 Gehäuse
35 Ringspalt
36 zweiter Übertrittsquerschnitt
37 Dichtelement
38 Querbohrung
39 Drucksicherungsventil
40 Dichtelement
41 Gehäuse
42 Ausgangskammer
43 Anschlussstutzen
44 Durchgangsbohrung
45 Gehäuseteil
46 Gehäuseteil
47 Ausnehmung
48 Längsachse
49 Querbohrung, Kanal
50 Rückschlagventilsitz
51 Hülse
52 Ringspalt
53 Rückschlagventilkörper
54 Kugel
55 Betätigungselement
56 Sperrventilkörper
57 Dichtelement
58 Hülse
59 Sperrventilsitz
60 Durchgangsausnehmung
61 Absatz
62 Sicherungsring
63 Ringraum
64 Dichtelement
65 Dichtelement
66 Bohrung, Kanal
67 Überwurfmutter
68 Übertrittsquerschnitt
69 Sperrventil
70 Ringraum
71 Anschlag
72 Übertrittsquerschnitt
73 Ringraum
74 Rückschlagventil
75 Überwurfmutter
76 Innenraum
77 Mantelfläche
78 Anschlussfläche

## Patentansprüche

1. Reifen-Druckbeaufschlagungseinrichtung (1) mit
aa) einem Felgen-Anschlusselement (7) mit einem Eingangsanschluss (12) des Felgen-Anschlusselements (7), der mit einem Rohr oder Schlauch (8) koppelbar ist, und einem Ausganganschluss (14) des Felgen-Anschlusselements (7), der mit einer Felge (2) koppelbar ist, und/oder
ab) einer Achskörper-Drehdurchführung (6), welche
- einen an einem Achskörper (3) befestigbaren Stator (16) mit einem Eingangsanschluss (9) der Achskörper-Drehdurchführung (6), welcher mit dem Achskörper (3) koppelbar ist,
- einen gegenüber dem Stator (16) verdrehbaren Rotor (21) mit einem Ausgangsanschluss (10) der Achskörper-Drehdurchführung (6), welcher mit einem oder dem Rohr oder Schlauch (8) koppelbar ist, und
- eine bei relativer Rotation des Rotors (21) gegenüber dem Stator (16) nach außen abgedichtete pneumatische Verbindung zwischen dem Stator (16) und dem Rotor (21)
aufweist,
**dadurch gekennzeichnet, dass**
ba) das Felgen-Anschlusselement (7)
- ein mechanisches Betätigungselement (55) aufweist, welches in den Ausgangsanschluss (14) des Felgen-Anschlusselements (7) so hineinragt, so dass das mechanische Betätigungselement (55) bewegungsgesteuert mit einem Anschließen an die Felge (2) betätigt wird, womit ein Sperrventil (69) geöffnet wird, und
- ein Rückschlagventil (74) aufweist,
wobei das Rückschlagventil (74) und das Sperrventil (69) in fluidischer Reihenschaltung zwischen dem Eingangsanschluss (12) des Felgen-Anschlusselements (7) und dem Ausgangsanschluss (14) des Felgen-Anschlusselements (7) angeordnet sind, und/oder
bb) die Achskörper-Drehdurchführung (6) einen ersten Übertrittquerschnitt (32) und einen zweiten Übertrittquerschnitt (36) aufweist, die in fluidischer Parallelschaltung zwischen dem Eingangsanschluss (9) der Achskörper-Drehdurchführung (6) und dem Ausgangsanschluss (10) der Achskörper-Drehdurchführung (6) angeordnet sind, wobei der erste Übertrittsquerschnitt (32) permanent offen ist und der zweite Übertrittsquerschnitt (36) über ein Drucksicherungsventil (39) verschließbar ist, welches bei einem Überschreiten eines Schwellwerts einer Druckdifferenz zwischen dem Druck an dem Eingangsanschluss (9) der Achskörper-Drehdurchführung (6) und dem Druck an dem Ausgangsanschluss (10) der Achskörper-Drehdurchführung (6) eine sperrende Drucksicherungsstellung einnimmt.

2. Reifen-Druckbeaufschlagungseinrichtung (1) nach Anspruch 1, **dadurch gekennzeichnet, dass** bei dem Felgen-Anschlusselement (7) das Sperrventil (69) als Sitzventil ausgebildet ist, dessen mit einem Sperrventilsitz (59) in Wechselwirkung tretender Sperrventilkörper (56) von dem Betätigungselement (55) ausgebildet ist.

3. Reifen-Druckbeaufschlagungseinrichtung (1) nach einem der vorhergehenden Ansprüche, **dadurch gekennzeichnet, dass** bei dem Felgen-Anschlusselement (7) das Betätigungselement (55) einen Anschlag (71) für einen Rückschlagventilkörper (53) des Rückschlagventils (74) bildet, wobei der Anschlag (71) eine Öffnungsstellung des Rückschlagventilkörpers (53) relativ zu einem Rückschlagventilsitz (50) definiert.

4. Reifen-Druckbeaufschlagungseinrichtung (1) nach einem der vorhergehenden Ansprüche, **dadurch gekennzeichnet, dass** bei dem Felgen-Anschlusselement (7)
a) ein oder der Rückschlagventilsitz (50) des Rückschlagventils (74) von einem Gehäuse oder Gehäuseteil (45) des Felgen-Anschlusselements (7) ausgebildet ist und/oder
b) ein oder der Rückschlagventilkörper (53) in einer Innenbohrung oder Ausnehmung des Gehäuses oder Gehäuseteils (45) oder einer Innenbohrung oder Ausnehmung einer in das Gehäuse oder Gehäuseteil (45) eingesetzten Hülse (51) so geführt ist, dass sich dieser relativ zu einem oder dem Rückschlagventilsitz (50) zwischen einer Öffnungsstellung und einer Schließstellung bewegen kann.

5. Reifen-Druckbeaufschlagungseinrichtung (1) nach Anspruch 4, **dadurch gekennzeichnet, dass** bei dem Felgen-Anschlusselement (7) die Innenbohrung mit dem Rückschlagventilkörper (53) einen Ringspalt (52) ausbildet.

6. Reifen-Druckbeaufschlagungseinrichtung (1) nach einem der vorhergehenden Ansprüche, **dadurch gekennzeichnet, dass** das Felgen-Anschlusselement (7)
a) eine Hülse (58) aufweist, die in eine Ausnehmung (47) eines ersten Gehäuseteils (45) eingesetzt ist und durch die sich das Betätigungselement (55) erstreckt,
b) eine weitere Hülse (51) in die Ausnehmung (47) des ersten Gehäuseteils (45) eingesetzt ist, in der ein oder der Rückschlagventilkörper (53) so geführt ist, dass sich der Rückschlagventilkörper (53) relativ zu einem oder dem Rückschlagventilsitz (50) zwischen einer Öffnungsstellung und einer Schließstellung bewegen kann, wobei die weitere Hülse (51) benachbart zu einem oder dem Rückschlagventilsitz (50) angeordnet ist,
c) das Betätigungselement (55) einen oder den Sperrventilkörper (56) in Form eines Sperrventiltellers ausbildet, welcher axial zwischen den beiden Hülsen (51, 58) angeordnet ist,
d) in Abhängigkeit von der fluidischen Beaufschlagung des Felgen-Anschlusselements (7) der Rückschlagventilkörper (53) in der weiteren Hülse (51) zwischen dem Rückschlagventilsitz (50) und dem oder einem von dem Betätigungselement (55) ausgebildeten Anschlag (71) bewegbar ist,
e) die Ausnehmung (47) über einen Kanal mit einer Mantelfläche des ersten Gehäuseteils (45) verbunden ist,
f) das erste Gehäuseteil (45) in eine Ausnehmung eines zweiten Gehäuseteils (46) eingesetzt ist, wobei zwischen dem ersten Gehäuseteil (45) und dem zweiten Gehäuseteil (46) ein Ringraum (63) gebildet ist, in den der Kanal (49) einmündet und
g) der Ringraum (63) über einen Kanal (66) mit dem Eingangsanschluss (12) des Felgen-Anschlusselements (7) verbunden ist.

7. Reifen-Druckbeaufschlagungseinrichtung (1) nach einem der vorhergehenden Ansprüche, **dadurch gekennzeichnet, dass** bei der Achskörper-Drehdurchführung (6) stromaufwärts des ersten Übertrittquerschnitts (32) und des zweiten Übertrittquerschnitts (36) mindestens ein Filterelement (24) angeordnet ist.

8. Reifen-Druckbeaufschlagungseinrichtung (1) nach einem der vorhergehenden Ansprüche, **dadurch gekennzeichnet, dass** bei der Achskörper-Drehdurchführung (6)
a) der erste Übertrittsquerschnitt (32) von einer Durchgangsbohrung eines Ventilkörpers (27) des Drucksicherungsventils (39) ausgebildet ist und/oder
b) der zweite Übertrittsquerschnitt (36) von einem Ringspalt (35) ausgebildet ist, welcher radial innenliegend von dem oder einem Ventilkörper (27) des Drucksicherungsventils (39) begrenzt ist und radial außenliegend von einer Ausnehmung (22) eines Gehäuses (34) oder eines Einsatzes des Gehäuses (34) der Achskörper-Drehdurchführung (6) begrenzt ist.

9. Reifen-Druckbeaufschlagungseinrichtung (1) nach einem der vorhergehenden Ansprüche, **dadurch gekennzeichnet, dass** der erste Übertrittsquerschnitt (32) mit einer Drosselbohrung (33) gebildet ist.

10. Reifen-Druckbeaufschlagungseinrichtung (1) nach einem der vorhergehenden Ansprüche, **dadurch gekennzeichnet, dass** das Drucksicherungsventil (39) eine Schalthysterese aufweist.

11. Reifen-Druckbeaufschlagungseinrichtung (1) nach einem der vorhergehenden Ansprüche, **dadurch gekennzeichnet, dass** eine Gesamt-Drosselwirkung des Felgen-Anschlusselements (7) größer ist als eine Gesamt-Drosselwirkung der Achskörper-Drehdurchführung (6).

12. Reifen-Druckbeaufschlagungseinrichtung (1) nach einem der vorhergehenden Ansprüche, **dadurch gekennzeichnet, dass** die Reifen-Druckbeaufschlagungseinrichtung (1) als Reifen-Nachfülleinrichtung ausgebildet ist.

## Claims

1. Tyre pressurisation device (1) with
aa) a wheel rim connector element (7) with an inlet port (12) of the wheel rim connector element (7), which can be coupled to a pipe or tube (8), and with an outlet port (14) of the wheel rim connector element (7), which can be coupled with a wheel rim (2), and/or
ab) an axle body rotary lead-through (6) which comprises
- a stator (16), which can be fixed to an axle body (3), with an inlet port 9 of the axle body rotary lead-through (6), which can be coupled to the axle body (3),
- a rotor (21), which can be rotated with respect to the stator (16), with an outlet port (10) of the axle body rotary lead-through (6), which can be coupled to a or the pipe or tube (8), and
- a pneumatic connection between the stator (16) and the rotor (21) that is sealed to the outside when the rotor (21) undergoes relative rotation with respect to the stator (16),
**characterised in that**
ba) the wheel rim connector element (7)
- comprises a mechanical actuation element (55), which protrudes into the outlet port (14) of the wheel rim connector element (7) in such a way that the mechanical actuation element (55) is actuated in a motion-controlled way when connected to the wheel rim (2), in which way a stop valve (69) is opened, and
- comprises a non-return valve (74),
where the non-return valve (74) and the stop valve (69) are arranged between the inlet port (12) of the wheel rim connector element (7) and the outlet port (14) of the wheel rim connector element (7) in fluidic series connection and/or
bb) the axle body rotary lead-through (6) comprises a first transfer cross-section (32) and a second transfer cross-section (36), which in fluidic parallel connection are arranged between the inlet port (9) of the axle body rotary lead-through (6) and the outlet port (10) of the axle body rotary lead-through (6), where the first transfer cross-section (32) is permanently open and the second transfer cross-section (36) can be closed via a pressure securing valve (39), which takes up a blocking pressure securing position when a threshold value of a pressure difference between the pressure on the inlet port (9) of the axle body rotary lead-through (6) and the pressure on the outlet port (10) of the axle body rotary lead-through (6) is surpassed.

2. Tyre pressurisation device (1) according to claim 1, **characterised in that** in the wheel rim connector element (7) the stop valve (69) is realised as a seat valve, the stop valve body (56) of which that enters into interaction with a stop valve seat (59) is formed by the actuation element (55).

3. Tyre pressurisation device (1) according to one of the preceding claims, **characterised in that** in the wheel rim connector element (7) the actuation element (55) forms a stop (71) for a non-return valve body (53) of the non-return valve (74), where the stop (71) defines an open position of the non-return valve body (53) relative to a non-return valve seat (50).

4. Tyre pressurisation device (1) according to one of the preceding claims, **characterised in that** in the wheel rim connector element (7)
a) a or the non-return valve seat (50) of the non-return valve (74) is formed by a housing or housing part (45) of the wheel rim connector element (7) and/or
b) a or the non-return valve body (53) is guided in an inner bore or recess of the housing or the housing part (45) or an inner bore or recess of a sleeve (51) inserted into the housing or housing part (45) in a way such that it can move relative to a or the non-return valve seat (50) between an open position and a closed position.

5. Tyre pressurisation device (1) according to claim 4, **characterised in that** in the wheel rim connector element (7) the inner bore forms an annular gap (52) with the non-return valve body (53).

6. Tyre pressurisation device (1) according to one of the preceding claims, **characterised in that** the wheel rim connector element (7)
a) comprises a sleeve (58), which is inserted into an recess (47) of a first housing part (45) and through which the actuation element (55) extends,
b) a further sleeve (51) is inserted into the recess (47) of the first housing part (45) in which the or a non-return valve body (53) is guided in such a way that the non-return valve body (53) can move relative to a or the non-return valve seat (50) between an open position and a closed position, where the further sleeve (51) is arranged neighbouring a or the non-return valve seat (50),
c) the actuation element (55) forms a or the stop valve body (56) in the shape of a stop valve disc arranged axially between the two sleeves (51, 58),
d) depending on the fluidic biasing of the wheel rim connector element (7) the non-return valve body (53) is movable in the further sleeve (51) between the non-return valve seat (50) and the or a stop (71) formed by the or an actuation element (55),
e) the recess (47) is connected to an outer surface of the first housing part (45) via a channel,
f) the first housing part (45) is inserted into a recess of a second housing part (46), where between the first housing part (45) and the second housing part (46) a ring space (63) is formed into which the channel (49) opens, and
g) the ring space (63) is connected to the inlet port (12) of the wheel rim connector element (7) via a channel (66).

7. Tyre pressurisation device (1) according to one of the preceding claims, **characterised in that** in the axle body rotary lead-through (6) upstream of the first transfer cross section (32) and the second transfer cross section (36) at least one filter element (24) is arranged.

8. Tyre pressurisation device (1) according to one of the preceding claims, **characterised in that** in the axle body rotary lead-through (6)
a) the first transfer cross section (32) is formed by a through bore of a valve body (27) of the pressure securing valve (39) and/or
b) the second transfer cross section (36) is formed by an annular gap (35), which on its radially inner side is limited by the or a valve body (27) of the pressure securing valve (39) and on its radially outer side is limited by a recess (22) of a housing (34) or an insert of the housing (34) of the axle body rotary lead-through (6).

9. Tyre pressurisation device (1) according to one of the preceding claims, **characterised in that** the first transfer cross section (32) comprises a throttle bore (33).

10. Tyre pressurisation device (1) according to one of the preceding claims, **characterised in that** the pressure securing valve (39) comprises a switching hysteresis.

11. Tyre pressurisation device (1) according to one of the preceding claims, **characterised in that** an overall throttling effect of the wheel rim connector device (7) is higher than an overall throttling effect of the axle body rotary lead-through (6).

12. Tyre pressurisation device (1) according to one of the preceding claims, **characterised in that** the tyre pressurisation device (1) is embodied as a tyre refilling device.

## Revendications

1. Dispositif de mise en pression de pneu (1), avec aa) un élément de raccord de jante (7), avec un raccord d'entrée (12) de l'élément de raccord de jante (7) qui peut être couplé à un tube ou tuyau (8), et avec un raccord de sortie (14) de l'élément de raccord de jante (7) qui peut être couplé à une jante (2), et/ou
ab) un passage tournant de corps d'axe (6), qui comporte
- un stator (16), pouvant être fixé sur un corps d'axe (3), avec un raccord d'entrée (9) du passage tournant de corps d'axe (6) qui peut être couplé au corps d'axe (3),
- un rotor (21), pouvant tourner par rapport au stator (16), avec un raccord de sortie (10) du passage tournant de corps d'axe (6) qui peut être couplé à un ou au rotor ou flexible (8), et
- un raccordement pneumatique entre le stator (16) et le rotor (21), rendu étanche vers l'extérieur lors de la rotation relative du rotor (21) par rapport au stator (16),
**caractérisé en ce que**
ba) l'élément de raccord de jante (7) comporte
- un élément d'actionnement (55) mécanique qui dépasse dans le raccord de sortie (14) de l'élément de raccord de jante (7) de telle sorte que l'élément d'actionnement (55) mécanique est, commandé par mouvement, actionné avec une jonction à la jante (2), ce qui ouvre une soupape d'arrêt (69), et
- un clapet antiretour (74),
le clapet antiretour (74) et la soupape d'arrêt (69) étant disposés en circuit en série fluidique entre le raccord d'entrée (12) de l'élément de raccord de jante (7) et le raccord de sortie (14) de l'élément de raccord de jante (7), et/ou
bb) le passage tournant de corps d'axe (6) comporte une première section transversale de franchissement (32) et une deuxième section transversale de franchissement (36) qui sont disposées en circuit en parallèle fluidique entre le raccord d'entrée (9) du passage tournant de corps d'axe (6) et le raccord de sortie (10) du passage tournant de corps d'axe (6), la première section transversale de franchissement (32) étant ouverte en permanence, et la deuxième section transversale de franchissement (36) pouvant être fermée par le biais d'une soupape de sécurité (39) qui adopte une position de sécurité de blocage lors d'un dépassement d'une valeur de seuil d'une différence de pression entre la pression sur le raccord d'entrée (9) du passage tournant de corps d'axe (6) et la pression sur le raccord de sortie (10) du passage tournant de corps d'axe (6).

2. Dispositif de mise en pression de pneu (1) selon la revendication 1, **caractérisé en ce que,** concernant l'élément de raccord de jante (7), la soupape d'arrêt (69) est constituée en tant que soupape à siège dont le corps de soupape d'arrêt (56) entrant en interaction avec un siège de soupape d'arrêt (59) est constitué par l'élément d'actionnement (55).

3. Dispositif de mise en pression de pneu (1) selon l'une des revendications précédentes, **caractérisé en ce que,** concernant l'élément de raccord de jante (7), l'élément d'actionnement (55) forme une butée (71) pour un corps de clapet antiretour (53) du clapet antiretour (74), la butée (71) définissant une position d'ouverture du corps de clapet antiretour (53) relativement à un siège de clapet antiretour (50).

4. Dispositif de mise en pression de pneu (1) selon l'une des revendications précédentes, **caractérisé en ce que,** concernant l'élément de raccord de jante (7),
a) un ou le siège de clapet antiretour (50) du clapet antiretour (74) est constitué d'un boîtier ou d'une partie de boîtier (45) de l'élément de raccord de jante (7) et/ou
b) un ou le corps de clapet antiretour (53) est guidé dans un alésage ou creux intérieur du boîtier ou de la partie de boîtier (45) ou dans un alésage ou creux intérieur d'une douille (51) introduite dans le boîtier ou la partie de boîtier (45) de telle sorte que ce corps peut se déplacer relativement à un ou au siège de clapet antiretour (50) entre une position d'ouverture et une position de fermeture.

5. Dispositif de mise en pression de pneu (1) selon la revendication 4, **caractérisé en ce que,** concernant l'élément de raccord de jante (7), l'alésage intérieur avec le corps de clapet antiretour (53) constitue une fente annulaire (52).

6. Dispositif de mise en pression de pneu (1) selon l'une des revendications précédentes, **caractérisé en ce que** l'élément de raccord de jante (7)
a) comporte une douille (58) qui est introduite dans un creux (47) d'une première partie de boîtier (45) et à travers laquelle s'étend l'élément d'actionnement (55),
b) une autre douille (51) est introduite dans le creux (47) de la première partie de boîtier (45), dans laquelle un ou le corps de clapet antiretour (53) est conduit de telle sorte que, relativement à un ou au siège de clapet antiretour (50), le corps de clapet antiretour (53) peut se déplacer entre une position d'ouverture et une position de fermeture, l'autre douille (51) étant disposée au voisinage d'un ou du siège de clapet antiretour (50),
c) l'élément d'actionnement (55) constitue une ou le corps de vanne d'arrêt (56) sous la forme d'un plateau de soupape d'arrêt qui est disposé axialement entre les deux douilles (51, 58),
d) en fonction de l'alimentation en fluide de l'élément de raccord de jante (7), le corps de clapet antiretour (53) est mobile dans l'autre douille (51) entre le siège de clapet antiretour (50) et la ou une butée (71) constituée par l'élément d'actionnement (55),
e) le creux (47) est raccordé, par le biais d'un canal, à une surface d'enveloppe de la première partie de boîtier (45),
f) la première partie de boîtier (45) est introduite dans un creux d'une deuxième partie de boîtier (46), un espace annulaire (63) étant formé entre la première partie de boîtier (45) et la deuxième partie de boîtier (46), espace dans lequel débouche le canal (49) et
g) l'espace annulaire (63) est, par le biais d'un canal (66), raccordé au raccord d'entrée (12) de l'élément de raccord de jante (7).

7. Dispositif de mise en pression de pneu (1) selon l'une des revendications précédentes, **caractérisé en ce que,** concernant le passage tournant de corps d'axe (6), au moins un élément filtrant (24) est disposé en amont de la première section transversale de franchissement (32) et de la deuxième section transversale de franchissement (36).

8. Dispositif de mise en pression de pneu (1) selon l'une des revendications précédentes, **caractérisé en ce que,** concernant le passage tournant de corps d'axe (6)
a) la première section transversale de franchissement (32) est constituée d'un alésage traversant d'un corps de soupape (27) de la soupape de sécurité (39) et/ou
b) la deuxième section transversale de franchissement (36) est constituée d'une fente annulaire (35) qui est limitée radialement et intérieurement par le ou un corps de soupape (27) de la soupape de sécurité (39) et est limitée radialement extérieurement par un creux (22) d'un boîtier (34) ou d'un insert du boîtier (34) du passage tournant de corps d'axe (6).

9. Dispositif de mise en pression de pneu (1) selon l'une des revendications précédentes, **caractérisé en ce que** la première section transversale de franchissement (32) est formée avec un alésage d'étranglement (33).

10. Dispositif de mise en pression de pneu (1) selon l'une des revendications précédentes, **caractérisé en ce que** la soupape de sécurité (39) présente une hystérésis de commutation.

11. Dispositif de mise en pression de pneu (1) selon l'une des revendications précédentes, **caractérisé en ce qu'**un effet d'étranglement global de l'élément de raccord de jante (7) est plus grand qu'un effet d'étranglement global du passage tournant de corps d'axe (6).

12. Dispositif de mise en pression de pneu (1) selon l'une des revendications précédentes, **caractérisé en ce que** le dispositif de mise en pression de pneu (1) est constitué en tant que dispositif de regonflage de pneu.
